# EUROPÄISCHE PATENTSCHRIFT

(11) **EP 4 070 046 B1**
(45) Veröffentlichungstag und Bekanntmachung des Hinweises auf die Patenterteilung: **08.05.2024**
(21) Anmeldenummer: 20810881.1
(22) Anmeldetag: 16.11.2020
(51) Int. Cl.: G01F 11/40, G01F 15/00

(54) **BEFÜLLVORRICHTUNG**
FILLING DEVICE
DISPOSITIF DE REMPLISSAGE

(30) Priorität: 06.12.2019 DE 102019219020
(43) Veröffentlichungstag der Anmeldung: 12.10.2022
(73) Patentinhaber: Glatt Gesellschaft mit beschränkter Haftung, 79589 Binzen (DE)
(72) Erfinder: THIES, Jochen, 79540 Lörrach (DE); NOWAK, Mirko, 79540 Lörrach (DE)
(74) Vertreter: Patentanwälte Magenbauer & Kollegen Partnerschaft mbB
(86) Internationale Anmeldenummer: PCT/EP2020/082203
(87) Internationale Veröffentlichungsnummer: WO 2021/110394

(56) Entgegenhaltungen:
- WO-A1-2004/003486
- JP-U- S5 294 850
- US-A- 1 891 038
- US-A- 2 318 725
- US-A- 4 109 835

## Beschreibung

Die Erfindung betrifft eine Befüllvorrichtung zur Dosierung einer definierten Menge an schüttgutartigem Material, wobei die Befüllvorrichtung eine Befülleinheit mit einem um eine Drehachse rotationssymmetrischen Grundkörper und einer zwei Steuerungsarme aufweisenden Steuerungseinrichtung, wobei der Grundkörper von mindestens einem in Achsrichtung der Drehachse verlaufenden, einen Einlassabschnitt, einen ein definiertes Volumen aufweisenden Dosierkanalabschnitt und einen Auslassabschnitt umfassenden Dosierkanal durchsetzt ist, wobei jeder Dosierkanal einen Dosierkanalabschnitteinlass und einen Dosierkanalabschnittauslass aufweist, und wobei der Grundkörper an einem ersten Ende eine erste Aufnahmeeinheit für ein an der Befülleinheit anordenbares Vorratsbehältnis für schüttgutartiges Material und an einem dem ersten Ende entgegengesetzten Ende eine zweite Aufnahmeeinheit für ein an der Befülleinheit anordenbares Aufnahmebehältnis für schüttgutartiges Material umfasst, und wobei der Grundkörper über zwei Steuerungsarmführungen zur Aufnahme der verschiebbar in diesen angeordneten Steuerungsarme der Steuerungseinrichtung verfügt, wobei der erste Steuerungsarm eine dem Dosierkanalabschnitteinlass zugeordnete Dosierkanalabschnitteinlassöffnung und der zweite Steuerungsarm eine dem Dosierkanalabschnittauslass zugeordnete Dosierkanalabschnittauslassöffnung aufweist, und wobei die Steuerungseinrichtung durch Verschieben wahlweise in unterschiedliche Schaltstellungen verbringbar ist, wobei eine Schaltstellung die Einlassstellung ist, in der beim Verbringen der Steuerungseinrichtung die Dosierkanalabschnitteinlassöffnung den ihr zugeordneten Dosierkanalabschnitteinlass zur Befüllung des Dosierkanals freigibt und gleichzeitig der Dosierkanalabschnittauslass verschlossen wird, und wobei eine Schaltstellung die Auslassstellung ist, in der beim Verbringen der Steuerungseinrichtung der Dosierkanalabschnitteinlass verschlossen wird und gleichzeitig die Dosierkanalabschnittauslassöffnung den ihr zugeordneten Dosierkanalabschnittauslass freigibt, und wobei der Grundkörper mehrteilig ausgebildet ist, wobei der Grundkörper einen um die Drehachse drehbaren Dosierkanalkörper aufweist, der über eine Vielzahl an Dosierkanalabschnitten mit unterschiedlichen definierten Volumina verfügt.

Befüllvorrichtungen gehören seit langem zum Stand der Technik. Nachstehend werden derartige Befüllvorrichtungen beschrieben.

Die US 2010/0193548 A1 offenbart ein Pulverspender, der ein Gehäuse, das einen Pulverbehälter umschließt und eine Abgabeöffnung aufweist, einen Pulverstößel, der verschiebbar innerhalb des Gehäuses zwischen einer Ausgangsposition, einer Zwischenposition und einer Endposition montiert ist, wobei der Pulverstößel über ein Abgabeende verfügt, das sich durch den Pulverbehälter bewegt, während sich der Pulverstößel von seiner Ausgangsposition in seine Zwischenposition bewegt, eine Dosierkammer, die gebildet wird, wenn der Pulverstößel seine Zwischenposition erreicht, wobei die Dosierkammer Pulver aufnimmt, wenn sich der Pulverstößel von seiner Ausgangsposition in seine Zwischenposition bewegt, eine Pulverbarriere mit einer geschlossenen Position und einer geöffneten Position, während in ihrer geschlossenen Position die Pulverbarriere das Austreten von Pulver durch die Dosieröffnung verhindert, wobei sich die Pulverbarriere von ihrer geschlossenen Position in ihre geöffnete Position bewegt, wenn sich der Pulverstößel von seiner Zwischenposition in seine Endposition bewegt, wobei der Pulverstößel das in der Dosierkammer enthaltene Pulver aus dem Dispenser und durch die Dosieröffnung drückt, wenn sich der Pulverstößel von seiner Zwischenposition in seine Endposition bewegt.

Die WO 2010/032028 A1 zeigt einen tragbaren Applikator zur Abgabe von Pulver, umfassend: einen Pulverbehälter mit einem ersten Ende und einem zweiten Ende; ein Auslassrohr, das an dem zweiten Ende des Behälters befestigt ist und durch das Pulver aus dem Behälter abgegeben werden kann; einen Regler mit einem Auslass, der an dem ersten Ende des Behälters direkt oder mittels einer Lanze befestigt ist; einen Auslass aus dem Regler; Mittel, die in den Regler integriert sind, umfassend einen Halter für eine Quelle von Druckgas zur Aufnahme innerhalb des Reglers oder eine separate Quelle von Druckgas, die mit dem Ausgang des Reglers gekoppelt werden soll; und Ventilmittel, die in den Regler integriert sind und einen Betrieb ermöglichen, sodass die Quelle von Druckgas, ob im Halter enthalten oder anderweitig, mit dem Ausgang des Reglers und von dort bis ins Innere des Spenders gekoppelt werden kann, sei es direkt oder mittels einer Lanze.

In der US 2014/0144926 A1 wird ein eine Vielzahl an Kammern aufweisende Pulverdosiereinheit gezeigt, wobei die Kammern das gleiche Volumen aufweisen und relativ zur Abdeckung der Pulverdosiereinheit durch einen Aktivierungsmechanismus verschiebbar sind, sodass das Pulver durch einen Auslass dosiert wird. Hierdurch wird für die exakte Dosierung von festen, oft pulverförmigen Materialien gesorgt, wobei die Pulverdosiereinheit Ausführungsformen sowohl tragbare als auch elektrisch betriebene Systeme umfassen.

Nachteilig an den vorgenannten technischen Lösungen ist der komplexe Aufbau sowie, dass ausschließlich das gleiche Volumen mit dem Pulverspender dosierbar ist.

Weitere Befüllvorrichtungen offenbaren die WO 2004/003486 A1, die US 1 891 038 A, die US 2 318 725 A, die JP S52 94850 U und die US 4 109 835 A.

Die WO 2004/003486 A1 offenbart eine Befüllvorrichtung für partikelförmiges Material umfassend ein Rohr mit einem darin befindlichen, im Wesentlichen vertikal ausgerichteten Durchgang. Ein Behälter, der partikelförmiges Material enthält, ist so angeordnet, dass er sich oberhalb des Rohrs befindet, sodass das partikelförmige Material in ein oberes Ende des Rohrs eintreten kann. Ein erstes Ventil ist so angeordnet, dass es sich öffnet um das partikelförmige Material aus dem Behälter in den Durchgang zu lassen, wenn ein erstes Aktivierungsmittel aktiviert wird. Ein zweites Ventil ist so angeordnet, dass es sich bei Aktivierung eines zweiten Aktivierungsmittels öffnet, damit das partikelförmige Material aus dem Rohr austreten kann. Durch die Aktivierung jedes der Aktivierungsmittel nacheinander wird ein abgemessenes Volumen an partikelförmigem Material durch das Rohr abgegeben.

Die US 1,891,038 A beschreibt Verbesserungen bei Befüllvorrichtungen, insbesondere für schüttgutartiges Material wie Cerealien, Körner, aber auch von Flüssigkeiten.

Auch die US 2,318,725 A zeigt eine Befüllvorrichtung für schüttgutartiges Material.

JP S52 94850 U offenbart eine Befüllvorrichtung für schüttgutartiges Material, wobei die Befüllvorrichtung insbesondere einen als Hohlzylinder ausgebildeten Einsatz aufweist.

Auch die US 4,109,835 A zeigt eine weitere Befüllvorrichtung für schüttgutartiges Material.

Aufgabe der Erfindung ist es daher eine Befüllvorrichtung zu entwickeln und bereitzustellen, die eine einfache Konstruktion bei gleichzeitig hoher Dosiergenauigkeit aufweist und bevorzugt die Dosierung unterschiedlicher Volumina erlaubt.

Diese Aufgabe wird bei eine Befüllvorrichtung eingangs genannte Art dadurch gelöst, dass jeder der unterschiedlichen Dosierkanalabschnitte mit einem definierten Volumen durch Drehen um die Drehachse im Dosierkanal des Grundkörpers verrastbar ist. Der Vorteil der Befüllvorrichtung liegt darin, dass die Befüllvorrichtung eine einfache Konstruktion aufweist und dennoch eine exakte Dosierung eines definierten Volumens erlaubt, wodurch die die Herstellungskosten deutlich reduzierbar sind. Weiter vorteilhaft besteht die Möglichkeit mit einer Befüllvorrichtung unterschiedlich große Volumina zu dosieren, wobei der verbaute Rastmechanismus es gestattet, den ein entsprechendes definiertes Volumen aufweisenden Dosierkanalabschnitt auszuwählen und in einfacher Art und Weise im Dosierkanal zu positionieren.

In einer diesbezüglich vorteilhaften Ausgestaltung der Befüllvorrichtung ist die Schaltstellung eine Schließstellung, in der beim Verbringen der Steuerungseinrichtung in die Schließstellung der Dosierkanalabschnitteinlass und gleichzeitig der Dosierkanalabschnittauslass verschlossen sind. Vorteilhaft ist daran, dass in der Schließstellung der Dosierkanalabschnitt des Dosierkanals vollständig durch die Steuerungsarme der Steuerungseinrichtung verschlossen ist, sodass bei einem Wechsel eines Vorratsbehältnisses oder des Aufnahmebehältnisses keine Verunreinigung stattfindet.

Darüber hinaus weist die Befülleinheit eine Kraftspeichereinrichtung auf, die derart zwischen Grundkörper und Steuerungseinrichtung angeordnet ist, dass die Steuerungseinrichtung in eine Grundstellung vorgespannt ist. Vorteilhafterweise ist so die Befüllvorrichtung vor dem Gebrauch stets in der gleichen Schaltstellung, nämlich der Grundstellung. Zweckmäßigerweise ist die Grundstellung die Einlassstellung oder die Schließstellung.

Entsprechend einer zusätzlichen Fortbildung der Befüllvorrichtung ist die Kraftspeichereinrichtung als Federelement, bevorzugt als eine Schraubenfeder, ausgebildet. Ein als Schraubenfeder ausgebildetes Federelement, das als Kraftspeichereinrichtung fungiert ist kostengünstig und in einfacher Weise in die Befüllvorrichtung einbaubar.

Bevorzugt umfassen die erste und/oder die zweite Aufnahmeeinheit ein Gewinde oder eine Passung zur Anordnung des Vorratsbehältnisses für schüttgutartiges Material und/oder des Aufnahmebehältnisses für schüttgutartiges Material. Durch das Vorratsbehältnis, bevorzugt ein Probennahmeglas, wird das schüttgutartige Material für die Dosierung bereitgestellt, das durch die mit einem Gewinde ausgestaltete Aufnahmeeinheit in sehr einfacher Art und Weise mit der Befülleinheit der Befüllvorrichtung verbindbar ist. Vorgenanntes gilt auch für das Aufnahmebehältnis, das bevorzugt als eine Art Reagenzglas oder Strohhalm ausgebildet ist.

Eine zusätzliche vorteilhafte Weiterbildung der Befüllvorrichtung weist eine das definierte Volumen des Dosierkanalabschnitts einstellbare Volumeneinstelleinrichtung auf. Bevorzugt ist die Volumeneinstelleinrichtung als mindestes ein in den Dosierkanalabschnitt des Dosierkanals einbringbarer Einsatz ausgebildet. Zweckmäßig ist der mindestens eine Einsatz als ein eine Wandstärke aufweisender Hohlzylinder ausgebildet. Darüber hinaus bevorzugt ist die Volumeneinstelleinrichtung als eine zumindest partiell durch einen Aktivierungsmechanismus einstellbare Wandung des Dosierkanalabschnitts ausgebildet. Hierdurch besteht die Möglichkeit das definierte Volumen in einfacher Art und Weise an die geforderten Volumina zur Dosierung des schüttgutartigen Materials anzupassen. Nachfolgend wird die Erfindung anhand der beiliegenden Zeichnung näher erläutert dieser zeigen
- Figur 1: einen Querschnitt durch eine Befülleinheit einer Befüllvorrichtung,
- Figur 2: einen Querschnitt durch den Grundkörper der Befülleinheit gemäß dem Beispiel aus Figur 1.

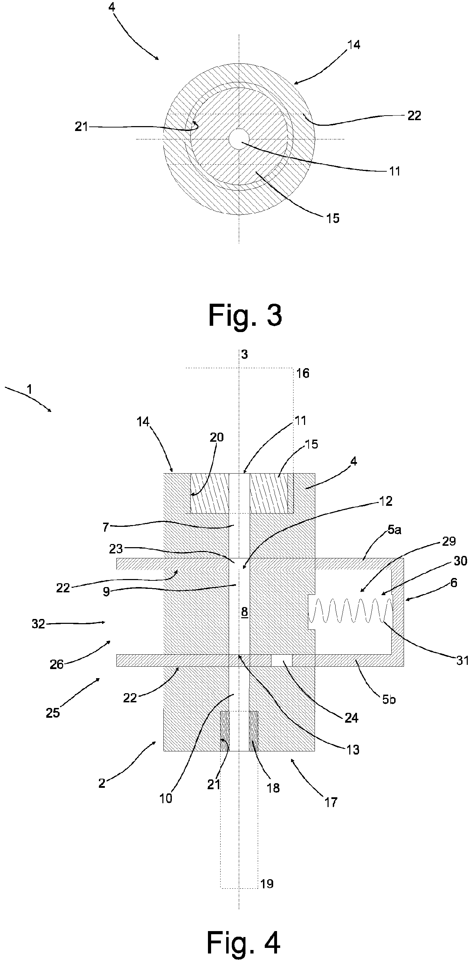

- Figur 3: eine Draufsicht auf die Befülleinheit der Befüllvorrichtung gemäß dem Beispiel aus Figur 1.
- Figur 4: einen Querschnitt durch eine Befüllvorrichtung mit an dieser angeordnetem Vorrats- und Aufnahmebehältnis gemäß dem Beispiel aus Figur 1,
- Figur 5: eine Draufsicht auf ein erfindungsgemäßes Ausführungsbeispiel einer Befülleinheit einer Befüllvorrichtung,
- Figur 6: einen Querschnitt durch die Befülleinheit der Befüllvorrichtung gemäß dem erfindungsgemäßen Ausführungsbeispiel,
- Figur 7: eine schematische Darstellung der Befülleinheit in einer als Einlassstellung bezeichneten Schaltstellung,
- Figur 8: eine schematische Darstellung der Befülleinheit in einer als Auslassstellung bezeichneten Schaltstellung,
- Figur 9: eine schematische Darstellung der Befülleinheit in einer als Schließstellung bezeichneten Schaltstellung,
- Figur 10: einen Querschnitt durch ein erstes Ausführungsbeispiel einer Befülleinheit einer Befüllvorrichtung mit einem als Hohlzylinder ausgebildeten Einsatz als Volumeneinstelleinrichtung,
- Figur 11: einen Querschnitt durch ein erstes Ausführungsbeispiel einer Befülleinheit einer Befüllvorrichtung mit einer durch einen Aktivierungsmechanismus partiell einstellbaren Wand des Dosierkanalabschnitts als Volumeneinstelleinrichtung.

Sofern keine anderslautenden Angaben gemacht werden, bezieht sich die nachfolgende Beschreibung auf sämtliche in der Zeichnung illustrierten Ausführungsformen einer erfindungsgemäßen Befüllvorrichtung 1 zur Dosierung einer definierten Menge an schüttgutartigem Material.

Die Befüllvorrichtung 1 umfasst eine Befülleinheit 2 mit einem um eine Drehachse 3 rotationssymmetrischen Grundkörper 4 und einer zwei Steuerungsarme 5 aufweisenden Steuerungseinrichtung 6.

Der Grundkörper 4 ist von mindestens einem in Achsrichtung der Drehachse 3 verlaufenden, einen Einlassabschnitt 7, einen ein exakt definiertes Volumen 8 aufweisenden Dosierkanalabschnitt 9 und einen Auslassabschnitt 10 umfassenden Dosierkanal 11 durchsetzt. Jeder Dosierkanal 11 weist einen Dosierkanalabschnitteinlass 12 und einen Dosierkanalabschnittauslass 13 auf. Der Dosierkanal 11 erstreckt sich in gerader Form entlang der Drehachse 3.

Der Grundkörper 4 umfasst an einem ersten Ende 14 eine erste Aufnahmeeinheit 15 für ein an der Befülleinheit 2 anordenbares Vorratsbehältnis 16, insbesondere ein Probennahmeglas, für schüttgutartiges Material. An einem dem ersten Ende 14 entgegengesetzten Ende 17 umfasst der Grundkörper 4 eine zweite Aufnahmeeinheit 18 für ein an der Befülleinheit 2 anordenbares Aufnahmebehältnis 19 für schüttgutartiges Material. Die erste Aufnahmeeinheit 15 weist ein als bevorzugte Ausführungsform ein Gewinde 20 zur Anordnung des Vorratsbehältnisses 16 für schüttgutartiges Material auf. Dementsprechend wird das Vorratsbehältnis 16 mit der Befülleinheit 2 verschraubt. Im Gegensatz hierzu weist die zweite Aufnahmeeinheit 18 als bevorzugte Ausführungsform eine Passung 21 für das Aufnahmebehältnisses 19 für schüttgutartiges Material auf. Somit wird das Aufnahmebehältnis 18, beispielsweise ein Reagenzglas oder ein Strohhalm in die Aufnahmeeinheit 18 geklemmt.

Die Aufnahmeeinheiten 15 und 18 sind in den gezeigten Ausführungsbeispielen senkrecht zur Drehachse 3 angeordnet. Andere Ausführungsvarianten, wie winkelig zur Drehachse 3 sind nicht illustriert.

In anderen nicht illustrierten Ausführungsbeispielen sind die Aufnahmeeinheiten 15, 18 jeweils als Gewinde 20 oder jeweils als Passung 21 ausgebildet.

Zudem verfügt der Grundkörper 4 über zwei Steuerungsarmführungen 22 zur Aufnahme der verschiebbar in diesen angeordneten Steuerungsarme 5 der Steuerungseinrichtung 6. Die zwei Steuerungsarmführungen 22 sind jeweils rechtwinklig zum Dosierkanal 11 angeordnet.

Hierbei weist der erste Steuerungsarm 5a eine dem Dosierkanalabschnitteinlass 12 zugeordnete Dosierkanalabschnitteinlassöffnung 23 und der zweite Steuerungsarm 5b eine dem Dosierkanalabschnittauslass 13 zugeordnete Dosierkanalabschnittauslassöffnung 24 auf. Die Steuerungsarme 5a und 5b sind bevorzugt parallel zueinander ausgebildet.

Die Steuerungseinrichtung 6 ist durch Verschieben wahlweise in unterschiedliche Schaltstellungen 25 verbringbar. Als Schaltstellungen 25 ergeben sich eine Einlassstellung 26, eine Auslassstellung 27 oder eine Schließstellung 28.

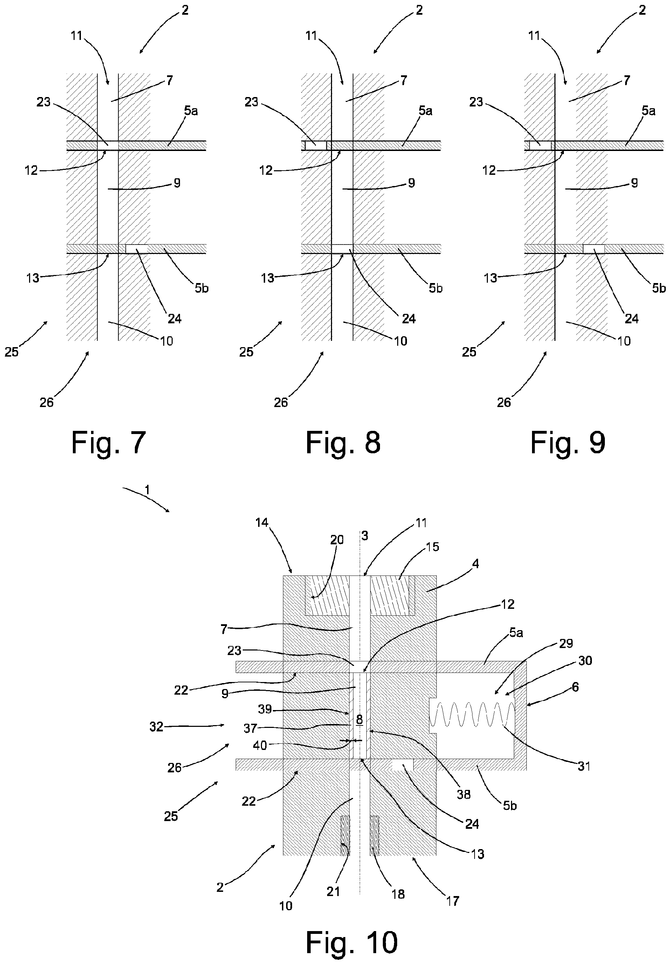

In Fig. 7 wird eine schematische Darstellung der Befülleinheit 2 in einer als Einlassstellung 26 bezeichneten Schaltstellung 25 gezeigt. Hierbei gibt beim Verbringen des ersten Steuerungsarms 5a der Steuerungseinrichtung 6 die Dosierkanalabschnitteinlassöffnung 23 den ihr zugeordneten Dosierkanalabschnitteinlass 12 zur Befüllung des Dosierkanals 11 frei und gleichzeitig wird der Dosierkanalabschnittauslass 13 durch den zweiten Steuerungsarms 5b der Steuerungseinrichtung 6 verschlossen.

Eine weitere Schaltstellung 25 wird mit einer schematischen Darstellung der Befülleinheit 2 in einer als Auslassstellung 27 bezeichneten Schaltstellung 25 in Fig. 8 dargestellt. Beim Verbringen der Steuerungseinrichtung 6 in die Auslassstellung 27 wird der Dosierkanalabschnitteinlass 12 durch den ersten Steuerungsarm 5a verschlossen und gleichzeitig gibt die im zweiten Steuerungsarm 5b angeordnete Dosierkanalabschnittauslassöffnung 24 den ihr zugeordneten Dosierkanalabschnittauslass 13 frei.

Fig. 9 zeigt die als Schließstellung 28 bezeichnete Schaltstellung 25, wobei beim Verbringen der Steuerungseinrichtung 6 in die Schließstellung 28 sowohl Dosierkanalabschnitteinlass 12 als auch der Dosierkanalabschnittauslass 13 durch die Steuerungsarme 5 der Steuerungseinrichtung 6 verschlossen sind.

Zweckmäßig weist die Befülleinheit 2 eine Kraftspeichereinrichtung 29 auf. Bevorzugt ist die Kraftspeichereinrichtung 29 als Federelement 30, bevorzugt als eine Schraubenfeder 31, ausgebildet. In einem nicht illustrierten Ausführungsbeispiel ist die Kraftspeichereinrichtung 29 als Dämpfer ausgebildet.

Die Kraftspeichereinrichtung 29 ist bevorzugt derart zwischen Grundkörper 4 und Steuerungseinrichtung 6 angeordnet, dass die Steuerungseinrichtung 6 in eine Grundstellung 32 vorgespannt ist. Hierbei ist die Grundstellung 32 die Einlassstellung 26 oder die Schließstellung 28.

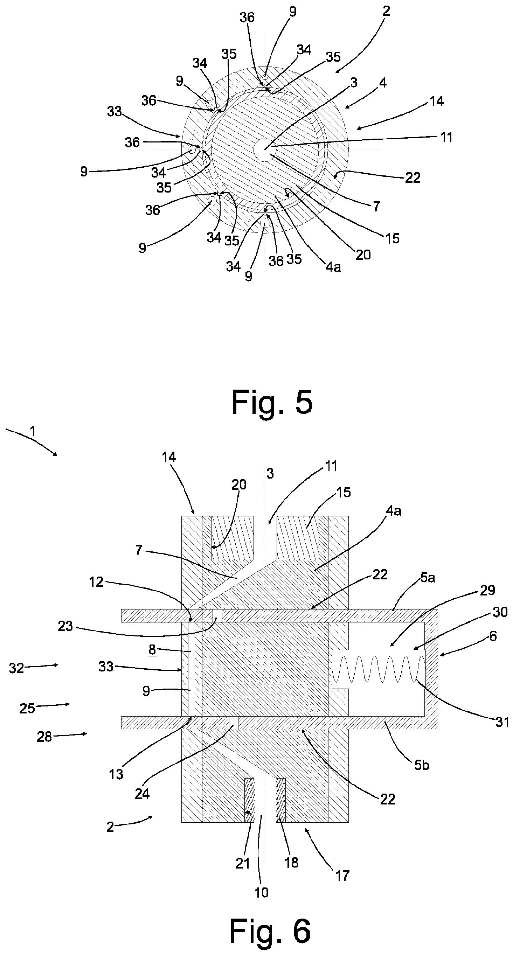

Gemäß einem weiteren in Fig. 5 dargestellten erfindungsgemäßen Ausführungsbeispiel ist der Grundkörper 4 mehrteilig ausgebildet. Hierbei weist der Grundkörper 4 einen um die Drehachse 3 drehbaren Dosierkanalkörper 33 auf, der über eine Vielzahl an Dosierkanalabschnitten 9 mit unterschiedlichen definierten Volumina 8 verfügt. Der Dosierkanalkörper 33 wird relativ zum Grundkörper-Innenteil 4a um die Drehachse 3 gedreht. Im Ausführungsbeispiel hat der Dosierkanalkörper 33 fünf Dosierkanalabschnitte 9, jeweils mit einem unterschiedlich großen definierten Volumen 8. Die Volumina 8 der Dosierkanalabschnitte 9 sind bevorzugt von sehr kleinen Mengen an schüttgutartigem Material im Bereich von Nanogramm bis hin zu mehreren Gramm ausführbar. Die fünf Dosierkanalabschnitte 9 sind in Umfangsrichtung in dem Dosierkanalkörper 33 angeordnet, wobei diese in einem Winkel von 45° voneinander beabstandet sind.

In Fig. 5 verlaufen der Einlassabschnitt 7 und der Auslassabschnitt 10 eine kurze Strecke lang entlang der Drehachse 3 bevor sie schräg radial nach außen weiterverlaufen. Der im Dosierkanalkörper 33 angeordnete Dosierkanalabschnitt 9 verläuft parallel zur Drehachse 3.

Jeder der unterschiedlichen Dosierkanalabschnitte 9 mit einem definierten Volumen 8 ist durch Drehen um die Drehachse 3 im Dosierkanal 11 des Grundkörpers 4 verrastbar. Hierzu weist der ein Grundkörper-Innenteil 4a als Rastnasen 34 ausgebildete Erhebungen 35 auf und der Dosierkanalkörper 33 die den Erhebungen 35 entsprechenden Vertiefungen 36. Durch den durch die Erhebungen 35 und Vertiefungen 36 ausgebildeten Rastmechanismus wird stets ein bündiges Verrasten des Dosierkanalabschnitts 9 im Dosierkanal 11 sichergestellt, sodass ein Befüllen des Dosierkanalabschnitts 9 mit schüttgutartigem Material erfolgen kann. Die Drehung des Dosierkanalkörpers 33 kann manuell oder elektrisch betrieben erfolgen.

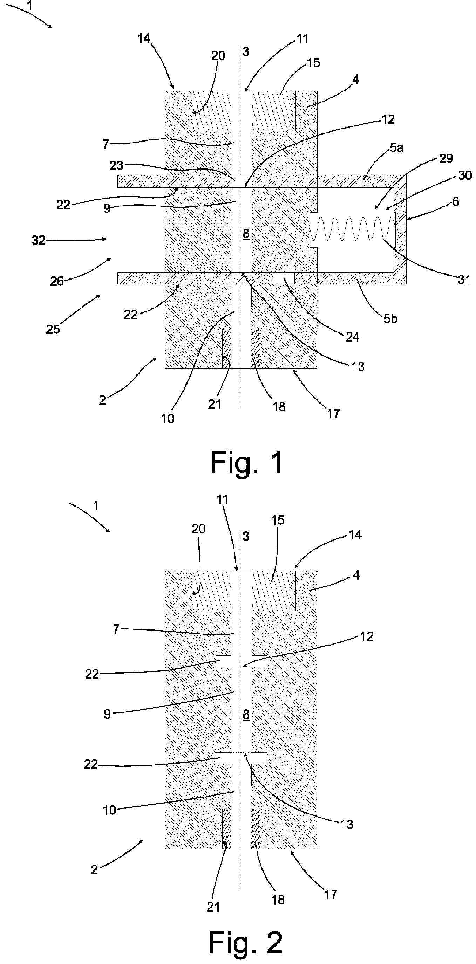

In Fig. 10 wird ein Ausführungsbeispiel einer Befüllvorrichtung 1 dargestellt, wobei im Gegensatz zu der in Fig. 1 gezeigten Befüllvorrichtung 1 im Dosierkanalabschnitt 9 ein als Hohlzylinder 37 ausgebildeter Einsatz 38 einer Volumeneinstelleinrichtung 39 ist. Durch den eine Wandstärke 40 aufweisenden Hohlzylinder 37 wird das definierte Volumen 8 im Dosierkanalabschnitt 9 verändert und ist daher einstellbar. Auch mehrere Einsätze 38 in Form von Hohlzylindern 37 sind denkbar. Durch das Einbringen von Hohlzylindern 37 mit unterschiedlicher Wandstärke 38 kann das Volumen 8 exakt an das geforderte Volumen angepasst werden.

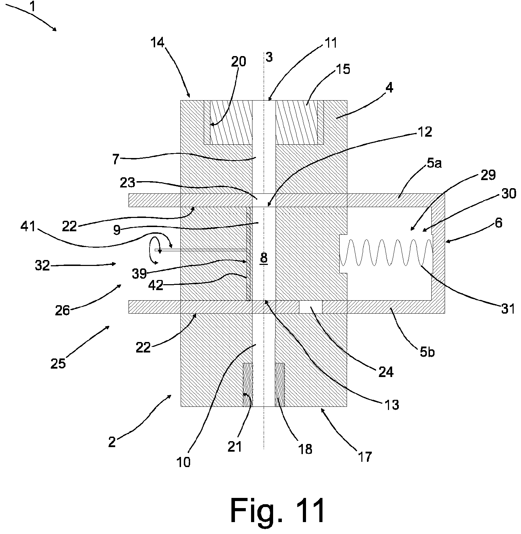

Darüber hinaus bevorzugt ist die Volumeneinstelleinrichtung 39 als eine zumindest partiell durch einen Aktivierungsmechanismus 41 einstellbare Wandung 42 des Dosierkanalabschnitts 11 ausgebildet. Diese Ausführungsform ist in Fig. 11 dargestellt. Als Aktivierungsvorrichtung 41 dient beispielsweise eine Schraube. Entsprechend der Drehrichtung der Schraube wird das Volumen 8 des Dosierkanalabschnitts 9 kleiner oder größer.

## Patentansprüche

1. Befüllvorrichtung (1) zur Dosierung einer definierten Menge an schüttgutartigem Material, wobei die Befüllvorrichtung (1) eine Befülleinheit (2) mit einem um eine Drehachse (3) rotationssymmetrischen Grundkörper (4) und einer zwei Steuerungsarme (5) aufweisenden Steuerungseinrichtung (6) aufweist, wobei der Grundkörper (4) von mindestens einem in Achsrichtung der Drehachse (3) verlaufenden, einen Einlassabschnitt (7), einen ein definiertes Volumen (8) aufweisenden Dosierkanalabschnitt (9) und einen Auslassabschnitt (10) umfassenden Dosierkanal (11) durchsetzt ist, wobei jeder Dosierkanal (11) einen Dosierkanalabschnitteinlass (12) und einen Dosierkanalabschnittauslass (13) aufweist, und wobei der Grundkörper (4) an einem ersten Ende (14) eine erste Aufnahmeeinheit (15) für ein an der Befülleinheit (2) anordenbares Vorratsbehältnis (16) für schüttgutartiges Material und an einem dem ersten Ende (14) entgegengesetzten Ende (17) eine zweite Aufnahmeeinheit (18) für ein an der Befülleinheit (2) anordenbares Aufnahmebehältnis (19) für schüttgutartiges Material umfasst, und wobei der Grundkörper (4) über zwei Steuerungsarmführungen (22) zur Aufnahme der verschiebbar in diesen angeordneten Steuerungsarme (5) der Steuerungseinrichtung (6) verfügt, wobei der erste Steuerungsarm (5a) eine dem Dosierkanalabschnitteinlass (12) zugeordnete Dosierkanalabschnitteinlassöffnung (23) und der zweite Steuerungsarm (5b) eine dem Dosierkanalabschnittauslass (13) zugeordnete Dosierkanalabschnittauslassöffnung (24) aufweist, und wobei die Steuerungseinrichtung (6) durch Verschieben wahlweise in unterschiedliche Schaltstellungen (25) verbringbar ist, wobei die Schaltstellung (25) eine Einlassstellung (26) ist, in der beim Verbringen der Steuerungseinrichtung (6) die Dosierkanalabschnitteinlassöffnung (23) den ihr zugeordneten Dosierkanalabschnitteinlass (12) zur Befüllung des Dosierkanals (11) freigibt und gleichzeitig der Dosierkanalabschnittauslass (13) verschlossen wird, und wobei die Schaltstellung (25) eine Auslassstellung (27) ist, in der beim Verbringen der Steuerungseinrichtung (6) der Dosierkanalabschnitteinlass (12) verschlossen wird und gleichzeitig die Dosierkanalabschnittauslassöffnung (24) den ihr zugeordneten Dosierkanalabschnittauslass (13) freigibt, und wobei der Grundkörper (4) mehrteilig ausgebildet ist, wobei der Grundkörper (4) einen um die Drehachse (3) drehbaren Dosierkanalkörper (33) aufweist, der über eine Vielzahl an Dosierkanalabschnitten (9) mit unterschiedlichen definierten Volumina (8) verfügt, **dadurch gekennzeichnet, dass** jeder der unterschiedlichen Dosierkanalabschnitte (9) mit einem definierten Volumen (8) durch Drehen um die Drehachse (3) im Dosierkanal (11) des Grundkörpers (4) verrastbar ist.

2. Befüllvorrichtung (1) nach Anspruch 1, **dadurch gekennzeichnet, dass** die Schaltstellung (25) eine Schließstellung (28) ist, in der beim Verbringen der Steuerungseinrichtung (6) in die Schließstellung (28) der Dosierkanalabschnitteinlass (12) und gleichzeitig der Dosierkanalabschnittauslass (13) verschlossen sind.

3. Befüllvorrichtung (1) nach Anspruch 1 oder 2, **dadurch gekennzeichnet, dass** die Befülleinheit (2) eine Kraftspeichereinrichtung (29) aufweist, die derart zwischen Grundkörper (4) und Steuerungseinrichtung (6) angeordnet ist, dass die Steuerungseinrichtung (6) in eine Grundstellung (32) vorgespannt ist.

4. Befüllvorrichtung (1) nach Anspruch 3, **dadurch gekennzeichnet, dass** die Grundstellung (32) die Einlassstellung (26) oder die Schließstellung (28) ist.

5. Befüllvorrichtung (1) nach Anspruch 3 oder 4, **dadurch gekennzeichnet, dass** die Kraftspeichereinrichtung (29) als Federelement (30), bevorzugt als eine Schraubenfeder (31), ausgebildet ist.

6. Befüllvorrichtung (1) nach einem der vorhergehenden Ansprüche, **dadurch gekennzeichnet, dass** die erste und/oder die zweite Aufnahmeeinheit (15, 18) ein Gewinde (20) oder eine Passung (21) zur Anordnung des Vorratsbehältnisses (16) für schüttgutartiges Material und/oder des Aufnahmebehältnisses (19) für schüttgutartiges Material umfassen.

7. Befüllvorrichtung (1) nach einem der vorhergehenden Ansprüche, **dadurch gekennzeichnet, dass** die Befüllvorrichtung (1) eine das definierte Volumen (8) des Dosierkanalabschnitts (9) einstellbare Volumeneinstelleinrichtung (39) aufweist.

8. Befüllvorrichtung (1) nach Anspruch 7, **dadurch gekennzeichnet, dass** die Volumeneinstelleinrichtung (39) als mindestes ein in den Dosierkanalabschnitt (9) des Dosierkanals (11) einbringbarer Einsatz (38) ausgebildet ist.

9. Befüllvorrichtung (1) nach Anspruch 8, **dadurch gekennzeichnet, dass** der mindestens eine Einsatz (38) als ein eine Wandstärke (40) aufweisender Hohlzylinder (37) ausgebildet ist.

10. Befüllvorrichtung (1) nach Anspruch 9, **dadurch gekennzeichnet, dass** die Volumeneinstelleinrichtung (39) als eine zumindest partiell durch einen Aktivierungsmechanismus (41) einstellbare Wandung (42) des Dosierkanalabschnitts (9) ausgebildet ist.

## Claims

1. Filling device (1) for dosing a defined amount of loose-type material, the filling device (1) comprising a filling unit (2) with a basic body (4) rotating symmetrically around an axis of rotation (3) and a control device (6) having two controlling arms (5), wherein the basic body (4) has at least one dosing channel (11) passing through it extending in the axial direction of the axis of rotation (3) , comprising an inlet section (7) , a dosing channel section (9) having a defined volume (8) and an outlet section (10), wherein each dosing channel (11) has a dosing channel section inlet (12) and a dosing channel section outlet (13), and wherein the basic body (4) comprises at a first end (14) a first intake unit (15) for a storage receptacle (16) for loose-type material arranged on the filling unit (2) and at an end (17) opposite the first end (14), a second intake unit (18) for an intake receptacle (19) for loose-type material arranged on the filling unit (2) and wherein the basic body (4) possesses two controlling arm guides (22) for accommodating the controlling arms displaceable in these controlling arms (5) of the controlling device (6), wherein the first controlling arm (5a) has a dosing channel section inlet opening (23) associated with the dosing channel section inlet (12) and the second controlling arm (5b) has a dosing channel section outlet opening (24) associated with the dosing channel section outlet (13) and wherein the control device (6) can be selectively brought into different shift positions (25) by displacement, wherein the shift position (25) is an inlet position (26) in which, when the control device (6) is brought there, the dosing channel section inlet opening (23) releases the dosing channel section inlet (12) associated with it to fill the dosing channel (11), and at the same time, the dosing channel section outlet (13) is closed, and wherein the shift position (25) is an outlet position (27) in which, when the control device (6) is brought there, the dosing channel section inlet (12) is closed and at the same time the dosing channel section outlet opening (24) releases the dosing channel section outlet (13) associated with it, and wherein the basic body (4) is formed in several parts, wherein the basic body (4) has a dosing channel body (33) rotatable around the axis of rotation (3), the body possessing a plurality of dosing channel sections (9) with different defined volumes (8), **characterised in that** each of the different dosing channel sections (9) with a defined volume (8) can be locked in the dosing channel (11) of the basic body (4) by rotation around the axis of rotation (3).

2. Filling device (1) according to Claim 1, **characterised in that** the shift position (25) is a closed position (28) in which, when the control device (6) is brought to the closed position (28), the dosing channel section inlet (12) and the dosing channel section outlet (13) are closed at the same time.

3. Filling device (1) according to Claim 1 or 2, **characterised in that** the filling device (2) has an energy storing device (29), which is arranged between the basic body (4) and the control device (6) such that the control device (6) is preloaded in a basic position (32).

4. Filling device (1) according to Claim 3, **characterised in that** the basic position (32) is the inlet position (26) or the closed position (28).

5. Filling device (1) according to Claim 3 or 4, **characterised in that** the energy storing device (29) is formed as a spring element (30), preferably as a coil spring (31).

6. Filling device (1) according to one of the preceding claims, **characterised in that** the first and/or the second intake unit (15, 18) preferably comprise/comprises a thread (20) or a fit (21) for arranging the storage receptacle (16) for loose-type material and/or the intake receptacle (19) for loose-type material.

7. Filling device (1) according to one of the preceding claims, **characterised in that** the filling device (1) has a volume adjusting device (39) for adjusting the defined volume (8) of the dosing channel section (9).

8. Filling device (1) according to Claim 9, **characterised in that** the volume adjusting device (39) is preferably formed as at least one insert (38) that can be fitted in the dosing channel section (9) of the dosing channel (11).

9. Filling device (1) according to Claim 10, **characterised in that** the at least one insert (38) is formed as a hollow cylinder (37) having a wall thickness (40).

10. Filling device (1) according to Claim 9, **characterised in that** the volume adjustment device (39) is formed as a wall (42) of the dosing channel section (9), the wall being at least partially adjustable by means of an actuating mechanism (41) .

## Revendications

1. Dispositif de remplissage (1) pour le dosage d'une quantité définie de matériau de type en vrac, dans lequel le dispositif de remplissage (1) présente une unité de remplissage (2) avec un corps de base (4) symétrique en rotation autour d'un axe de rotation (3) et un dispositif de commande (6) présentant deux bras de commande (5),
dans lequel le corps de base (4) est traversé par au moins un canal de dosage (11) s'étendant dans le sens axial de l'axe de rotation (3), comprenant une section d'entrée (7), une section de canal de dosage (9) présentant un volume défini (8) et une section de sortie (10), dans lequel chaque canal de dosage (11) présente une entrée de section de canal de dosage (12) et une sortie de section de canal de dosage (13), et dans lequel le corps de base (4) comprend à une première extrémité (14) une première unité de réception (15) pour un récipient de réserve (16) pouvant être agencé au niveau de l'unité de remplissage (2) pour du matériau de type en vrac et à une extrémité (17) opposée à la première extrémité (14) une seconde unité de réception (18) pour un récipient de réserve (19) pouvant être agencé au niveau de l'unité de remplissage (2) pour du matériau de type en vrac, et dans lequel le corps de base (4) dispose de deux guidages de bras de commande (22) pour la réception des bras de commande (5) agencés de manière coulissante dans celui-ci du dispositif de commande (6), dans lequel le premier bras de commande (5a) présente une ouverture d'entrée de section de canal de dosage (23) associée à l'entrée de section de canal de dosage (12) et le second bras de commande (5b) présente une ouverture de sortie de section de canal de dosage (24) associée à la sortie de section de canal de dosage (13), et dans lequel le dispositif de commande (6) peut être amené par coulissement au choix dans des positions de commutation (25) différentes, dans lequel la position de commutation (25) est une position d'entrée (26), dans laquelle lors du passage du dispositif de commande (6), l'ouverture d'entrée de section de canal de dosage (23) libère l'entrée de section de canal de dosage (12) qui lui est associée pour le remplissage du canal de dosage (11) et la sortie de section de canal de dosage (13) est simultanément fermée, et dans lequel la position de commutation (25) est une position de sortie (27), dans laquelle lors du passage du dispositif de commande (6), l'entrée de section de canal de dosage (12) est fermée et l'ouverture de sortie de section de canal de dosage (24) libère simultanément la sortie de section de canal de dosage (13) qui lui est associée, et dans lequel le corps de base (4) est réalisé en plusieurs parties, dans lequel le corps de base (4) présente un corps de canal de dosage (33) rotatif autour de l'axe de rotation (3) qui dispose d'une pluralité de sections de canal de dosage (9) avec différents volumes (8) définis, **caractérisé en ce que** chacune des sections de canal de dosage (9) différentes avec un volume défini (8) peut être encliquetée par rotation autour de l'axe de rotation (3) dans le canal de dosage (11) du corps de base (4).

2. Dispositif de remplissage (1) selon la revendication 1, **caractérisé en ce que** la position de commutation (25) est une position de fermeture (28), dans laquelle lors du passage du dispositif de commande (6) dans la position de fermeture (28), l'entrée de section de canal de dosage (12) et la sortie de section de canal de dosage (13) sont simultanément fermées.

3. Dispositif de remplissage (1) selon la revendication 1 ou 2, **caractérisé en ce que** l'unité de remplissage (2) présente un dispositif accumulateur de force (29) qui est agencé entre le corps de base (4) et le dispositif de commande (6) de telle manière que le dispositif de commande (6) soit précontraint dans une position de base (32).

4. Dispositif de remplissage (1) selon la revendication 3, **caractérisé en ce que** la position de base (32) est la position d'entrée (26) ou la position de fermeture (28).

5. Dispositif de remplissage (1) selon la revendication 3 ou 4, **caractérisé en ce que** le dispositif accumulateur de force (29) est réalisé en tant qu'élément de ressort (30), de préférence en tant que ressort hélicoïdal (31).

6. Dispositif de remplissage (1) selon l'une quelconque des revendications précédentes, **caractérisé en ce que** la première et/ou la seconde unité de réception (15, 18) comprennent un filet (20) ou un ajustement (21) pour l'agencement du récipient de réserve (16) pour du matériau de type en vrac et/ou du réceptacle (19) pour du matériau de type en vrac.

7. Dispositif de remplissage (1) selon l'une quelconque des revendications précédentes, **caractérisé en ce que** le dispositif de remplissage (1) présente un dispositif de réglage de volume (39) réglable du volume défini (8) de la section de canal de dosage (9).

8. Dispositif de remplissage (1) selon la revendication 7, **caractérisé en ce que** le dispositif de réglage de volume (39) est réalisé en tant qu'au moins un insert (38) pouvant être introduit dans la section de canal de dosage (9) du canal de dosage (11).

9. Dispositif de remplissage (1) selon la revendication 8, **caractérisé en ce que** l'au moins un insert (38) est réalisé en tant que cylindre creux (37) présentant une épaisseur de paroi (40).

10. Dispositif de remplissage (1) selon la revendication 9, **caractérisé en ce que** le dispositif de réglage de volume (39) est réalisé en tant que paroi (42) réglable au moins partiellement par un mécanisme d'activation (41) de la section de canal de dosage (9).
